# EUROPÄISCHE PATENTSCHRIFT

(11) **EP 3 218 163 B1**
(45) Veröffentlichungstag und Bekanntmachung des Hinweises auf die Patenterteilung: **01.08.2018**
(21) Anmeldenummer: 15793713.7
(22) Anmeldetag: 11.11.2015
(51) Int. Cl.: B29C 49/36

(54) **ROTATIONSMASCHINE MIT STATORVERDREHSICHERUNG**
ROTATING MASCHINE WITH STATOR ANTIROTATION SECURITY DEVICE
MACHINE ROTATIVE AVEC SÉCURISATION ANTIROTATIVE POUR LE STATOR

(30) Priorität: 11.11.2014 DE 102014016592
(43) Veröffentlichungstag der Anmeldung: 20.09.2017
(73) Patentinhaber: KHS Corpoplast GmbH, 22145 Hamburg (DE)
(72) Erfinder: LITZENBERG, Michael, 21039 Börnsen (DE); LINKE, Michael, 22159 Hamburg (DE); BAUMGARTE, Rolf, 22926 Ahrenburg (DE); LEWIN, Frank, 22889 Tangstedt (DE)
(74) Vertreter: Hausfeld, Norbert
(86) Internationale Anmeldenummer: PCT/EP2015/002262
(87) Internationale Veröffentlichungsnummer: WO 2016/074790

(56) Entgegenhaltungen:
- DE-A1- 4 340 291
- GB-A- 1 115 086

## Beschreibung

Die Erfindung betrifft eine Rotationsmaschine, bevorzugt eine Vorrichtung zur Blasformung von Behältern aus Kunststoff, mit wenigstens einem ersten Statorabschnitt und wenigstens einem räumlich vom ersten Statorabschnitt getrennten und drehbar zu dem ersten Statorabschnitt gelagerten zweiten Statorabschnitt, zwischen denen wenigstens ein Rotorabschnitt, bevorzugt ein Blasrad einer Vorrichtung zur Blasformung von Behältern aus Kunststoff, drehbar angeordnet ist, und mit einer Verdrehsicherung zwischen dem ersten und dem zweiten Statorabschnitt. Solche Rotationsmaschinen sind grundsätzlich z.B. aus der DE 43 40 291 A1, der DE-OS 42 12 583 oder der GB 1,115,086 A bekannt.

Zum Verpacken von flüssigen Lebensmitteln und Getränken werden Behälter verwendet. Hierbei handelt es sich insbesondere um Flaschen aus Glas oder Kunststoff oder um so genannte Pouches. Die Behälter werden in einem Herstellungsprozess an verschiedenen Vorrichtungen erstellt und beispielsweise anschließend an einer weiteren Vorrichtung befüllt. Beispielhaft sei hier das Herstellen von Behältern aus Kunststoff in einer Vorrichtung zur Blasformung (Blasmaschine) genannt.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung, auch Blasstation genannt, auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird u.a. in der DE-OS 43 40 291 erläutert. Die einleitend erwähnte Einleitung des unter Druck stehenden Gases umfasst auch die Druckgaseinleitung in die sich entwickelnde Behälterblase sowie die Druckgaseinleitung in den Vorformling zu Beginn des Blasvorganges. Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Die Blasstation stellt dabei eine Rotationsmaschine dar, die einen ersten Statorabschnitt als Basis aufweist, auf dem ein Rotorabschnitt, das Blasrad, drehbar angeordnet ist. In den Rotor müssen u.a. die Druckluft zur Vornahme der Blasformung sowie ggf. auch Öle oder Flüssigkeiten bzw. Elektrik eingebracht werden. Hierfür sind Dreheinführungen vorgesehen. Weiterhin ist oberhalb des Rotorabschnitts ein weiterer Statorabschnitt, gegebenenfalls ebenfalls mit Dreheinführungen vorgesehen. Problematisch hierbei ist, dass sich der über dem Rotorabschnitt angeordnete Statorabschnitt durch die Rotation des Rotorabschnitts gegenüber dem unterhalb des Rotorabschnitts als Basis angeordnete Statorabschnitt verdrehen würde, falls keine Sicherung des oberen Statorabschnitts vorgesehen würde. Dieser weitere Statorabschnitt ist daher mittels einer Verdrehsicherung von außen gegen das Verdrehen gesichert. Diese Verdrehsicherung ist in Form eines den oberen Statorabschnitt fixierenden und mit dem unteren Statorabschnitt statisch angeordneten Halteelements beispielsweise in Form eines Trägerarms vorgesehen.

Nachteilig dabei ist, dass die Verdrehsicherung von außen über das Blasrad bis nahe zum Zentrum bzw. zur Rotationsachse des Rotorabschnitts geführt wird. Um eine hinreichend Sicherung gegen das Verdrehen zu gewährleisten werden aufwendige Stützen, stabile Gestelle oder sogar eine Anbindung an das Maschinendach der Vorrichtung benötigt. Weiterhin ist es durch die Stützen möglich, dass sich Taumeln/Schwingungen des Rotorabschnitts bilden, was eine Signalaufnahme, insbesondere hinsichtlich Positionsinformationen schwierig macht.

Aufgabe der vorliegenden Erfindung ist es, die Verdrehsicherung zu vereinfachen und den Bauaufwand zu reduzieren, insbesondere beim Vorliegen von Dreheinführungen von oben.

Diese Aufgabe wird erfindungsgemäß dadurch gelöst, dass die Verdrehsicherung mindestens ein Element aufweist, das an dem Rotorabschnitt oder durch den Rotorabschnitt hindurchgehend angeordnet ist.

Eine erste vorteilhafte Lösung dieser Aufgabe wird sieht dabei vor, dass die Verdrehsicherung mindestens ein Element aufweist, das sich bei einer Drehung des Rotorabschnitts (30) mit dem Rotorabschnitt mitbewegt, dass durch die Verdrehsicherung eine Rotationsbewegung des wenigstens einen zweiten Statorabschnitt gegenläufig zur Rotationsbewegung des Rotorabschnitts erzeugbar ist, so dass der erste und der wenigstens eine zweite Statorabschnitt relativbewegungsfrei zueinander angeordnet sind.

Vorteilhaft dabei ist, dass die Vorrichtung insgesamt kleiner bauend ausgeführt werden kann. Weiterhin wird die Präzision der Verdrehsicherung erhöht, wobei der Schwingungseinfluss reduziert wird.

Eine weitere Lehre der Erfindung sieht vor, dass die Verdrehsicherung ein Getriebe ist, durch das die gegenläufige Rotationsbewegung des wenigstens einen zweiten Statorabschnitts erzeugbar ist. Hierbei handelt es sich um eine kompakte Art der Verdrehsicherung. Eine weitere Lehre der Erfindung sieht vor, dass das Getriebe am wenigstens einen zweiten Statorabschnitt ein erstes Getriebeelement aufweist und ein zweites mit dem ersten Getriebeelement wirkverbundenes weiteres Getriebeelement aufweist, und/oder dass das Getriebe am ersten Statorabschnitt ein erstes Getriebeelement aufweist und ein zweites mit dem ersten Getriebeelement wirkverbundenes weiteres Getriebeelement aufweist. Hierdurch wird ein einfacher und sicherer aufbau der Verdrehsicherung erreicht.

Eine weitere Lehre der Erfindung sieht vor, dass es sich bei den Getriebeelementen um Zahnräder oder Reibräder handelt, und/oder dass das zweite Getriebeelement abrollend auf dem ersten und mit diesem in Eingriff angeordnet ist, oder dass es sich bei den Getriebeelementen um Riemenscheiben handelt, die über einen Treibriemen miteinander verbunden sind.

Eine weitere Lehre der Erfindung sieht vor, dass das Getriebe eine Steuerung aufweist, bevorzugt mechanisch, hydraulisch oder elektronisch,

Eine weitere Lehre der Erfindung sieht vor, dass es sich bei der Steuerung um eine Transmissionswelle handelt, die bevorzugt gerade oder als Gelenkwelle ausgeführt ist, und die die beiden weiteren Getriebeelemente des ersten Statorabschnitts und des wenigstens einen zweiten Statorabschnitts mechanisch miteinander verbindet, oder dass es sich bei der Steuerung um eine Steuereinheit handelt, bestehend aus einem Steuerelement und wenigstens einem Antrieb, der mit dem zweiten Getriebeelement des wenigstens einen zweiten Statorabschnitts wirkverbunden ist und dieses antreibt, und bevorzugt einem mit einem der zweiten Getriebeelemente des ersten Statorabschnitts verbundenen Drehgeber. Auf diese Weise wird gewährleistet, dass das Übersetzungsverhältnis von erstem und zweitem Getriebeelement pro Statorabschnitt gleich ist.

Eine weitere Lehre der Erfindung sieht vor, dass an wenigstens einem Statorabschnitt eine Dreheinführung für Druckluft, Gas, Flüssigkeit, Elektrik und/oder Öl angeordnet ist.

Eine weitere Lehre der Erfindung sieht vor, dass der Antrieb des zweiten Getriebeelements des wenigstens einen zweiten Statorabschnitts über die Drehbewegung des Rotorabschnitts erfolgt, indem wenigstens ein zweites Getriebeelement mit dem Rotorabschnitt wirkverbunden ist.

Eine weitere Lehre der Erfindung sieht vor, dass die Verbindung erfolgt, indem die Transmissionswelle in einem Wellenlager im Rotorabschnitt gelagert ist, wobei sich die Transmissionswelle bevorzugt durch den Rotorabschnitt hindurch erstreckt.

Eine weitere Lehre der Erfindung sieht vor, dass es sich bei dem Element um ein Getriebeelement, eine Transmissionswelle oder eine Drehgeber handelt. Hierdurch wird auf besonders einfache Weise die Verdrehung der Statorabschnitte zueinander verhindert.

Eine zweite vorteilhafte Lösung sieht vor, dass das Element am ersten Statorabschnitt und am zweiten Statorabschnitt jeweils ortsfest diese verbindend angeordnet ist, so dass der erste Statorabschnitt und der wenigstens eine zweite Statorabschnitt relativbewegungsfrei zueinander angeordnet sind.

Vorteilhaft dabei ist, dass die Vorrichtung insgesamt kleiner bauend ausgeführt werden kann.

Eine weitere Lehre der Erfindung sieht vor, dass das Element torsionssteif ausgeführt ist. Hierdurch wird eine optimale Verdrehsicherung gewährleistet.

Eine weitere Lehre der Erfindung sieht vor, dass das Element als Stab oder Hohlstab ausgeführt ist. Eine weitere Lehre der Erfindung sieht vor, dass das Element im Drehzentrum des Rotorabschnitts oder unterhalb des zweiten Statorabschnitts angeordnet ist. Hierdurch wird auf einfache Weise, insbesondere bei Verwendung eines Hohlstab, ermöglicht, insbesondere bei zentrischer Anordnung, eine Drehein- und/oder Drehdurchführung in bzw. durch den Rotorabschnitt hinein/hindurch zu ermöglichen.

Eine weitere Lehre der Erfindung sieht vor, dass das Element mit wenigstens einem der Statorabschnitte über eine Kupplung verbunden ist. Vorteilhaft dabei ist, dass es sich bei der Kupplung um eine Kardankupplung oder um eine Balgkupplung handelt. Hierdurch wird die Präzision der Verdrehsicherung erhöht, wobei der Schwingungseinfluss reduziert wird. -

Anhand einer Zeichnung werden bevorzugte Ausführungsbeispiele der Erfindung schematisch dargestellt. Es zeigen:
- Fig. 1: eine teilgeschnittene schematische Ansicht einer erfindungsgemäßen Vorrichtung,
- Fig. 2: eine vergrößerte Ausschnittsansicht zu Fig. 1,
- Fig. 3: eine schematische Prinzipskizze einer ersten Ausführungsform einer erfindungsgemäßen Verdrehsicherung analog Fig. 1,
- Fig. 4: eine schematische Prinzipskizze einer zweiten Ausführungsform einer erfindungsgemäßen Verdrehsicherung
- Fig. 5: eine schematische Prinzipskizze einer dritten Ausführungsform einer erfindungsgemäßen Verdrehsicherung,
- Fig. 6: eine schematische Prinzipskizze einer vierten Ausführungsform einer erfindungsgemäßen Verdrehsicherung,
- Fig. 7: eine schematische geschnittene Ansicht einer weiteren Ausführungsform einer erfindungsgemäßen Verdrehsicherung,
- Fig. 8: eine räumliche teilgeschnittene Ansicht zu Fig. 7,
- Fig. 9: eine schematische geschnittene Ansicht einer weiteren Ausführungsform einer erfindungsgemäßen Verdrehsicherung,
- Fig. 10: eine räumliche teilgeschnittene Ansicht zu Fig. 9,
- Fig. 11: eine schematische geschnittene Ansicht einer weiteren Ausführungsform einer erfindungsgemäßen Verdrehsicherung, und
- Fig. 12: eine räumliche teilgeschnittene Ansicht zu Fig. 11.

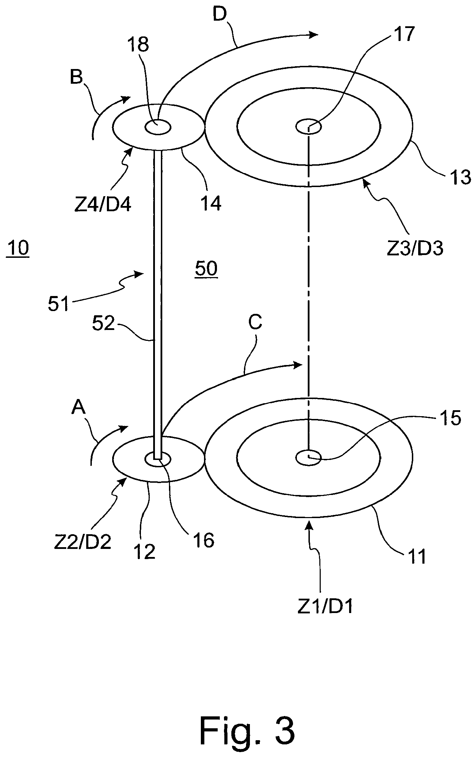

Fig. 3 zeigt eine schematische Prinzipskizze einer ersten Ausführungsform einer erfindungsgemäßen Verdrehsicherung 10. An einem Statorabschnitt 20 ist ein erstes Getriebeelement 11 fest angeordnet. Hierbei handelt es sich um ein Zahnrad mit der Zähneanzahl Z1. Dieses ist wirkverbunden mit einem zweiten Getriebeelement 12 ebenfalls in Form eines Zahnrades mit der Zähneanzahl Z2. Die Zahnräder 11 und 12 befinden sich kämmend im Eingriff. Das Zahnrad 11 ist dabei im Bezug auf das Zahnrad 12 fest angeordnet und weist eine Mittelpunkt 15 auf. Das Zahnrad 12 wälzt auf dem Zahnrad 11 um den Mittelpunkt 15 in Wälzrichtung C ab, wobei es sich um einen Mittelpunkt 16 als Drehzentrum in Rotationsrichtung A dreht.

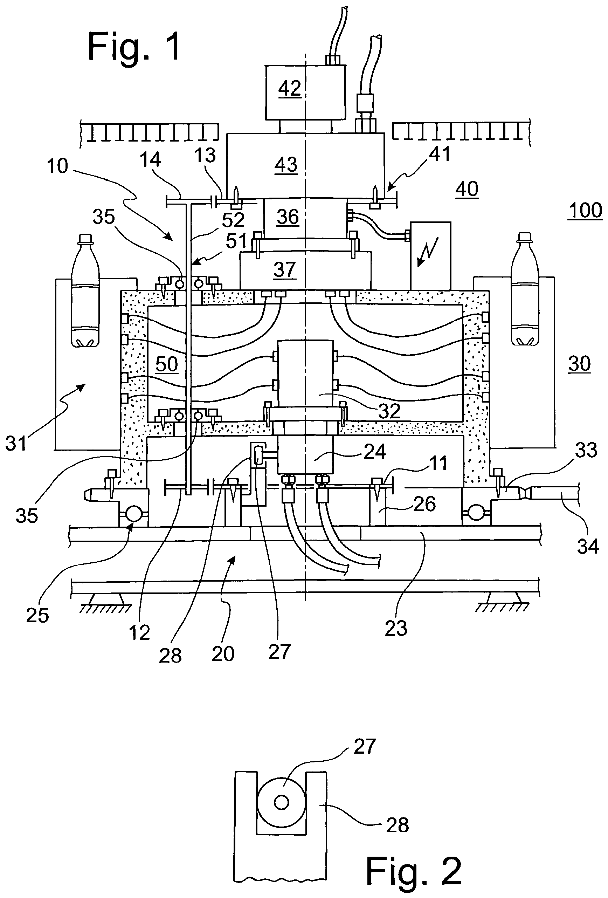

Oberhalb des Statorabschnitts 20 ist ein Rotorabschnitt 30 angeordnet, der drehbar um das Zentrum 15 als Drehzentrum 15 für den Rotorabschnitt 30 auf dem Statorabschnitt 20 gelagert ist (siehe Fig. 1).

Oberhalb des Rotorabschnitts 30 und auf diesen ebenfalls drehbar angeordnet ist ein zweiter Statorabschnitt 40 vorgesehen (siehe Fig. 1). An dem Statorabschnitt 40 ist ein drittes Getriebeelement 13 fest angeordnet. Hierbei handelt es sich um ein Zahnrad mit der Zähneanzahl Z3. Dieses ist wirkverbunden mit einem vierten Getriebeelement 14 ebenfalls in Form eines Zahnrades mit der Zähneanzahl Z4. Die Zahnräder 13 und 14 befinden sich kämmend im Eingriff. Das Zahnrad 13 weist eine Mittelpunkt 17 auf. Das Zahnrad 14 wälzt auf dem Zahnrad 13 um den Mittelpunkt 17 in Wälzrichtung D ab, wobei es sich um einen Mittelpunkt 18 als Drehzentrum in Rotationsrichtung B dreht.

Die Zahnräder 12 und 14 bzw. die Getriebeelemente 12 und 14 sind mit einem Steuerelement 51 verbunden. Hierbei handelt es sich um eine Transmissionswelle 52, die jeweils in den Mittelpunkten 16 und 18 der Zahnräder 12 und 14 angreift und diese damit wirkverbindet, sodass die Zahnräder 12 und 14 mit der gleichen Drehzahl drehen. Die Transmissionswelle 52 stellt damit eine Steuerung 50 dar.

Das Steuerelement 51 ist dabei so angeordnet, dass es drehbar im Rotorabschnitt 40 gelagert ist. Wird der Rotorabschnitt 40 um den Mittelpunkt 15 rotiert nimmt dieser das Steuerelement 51 mit und wälzt dabei die Zahnräder 12 und 14 auf den Zahnrädern 11 und 13 ab.

Das Zahnrad 11 ist fest an der Rotationsvorrichtung 100 montiert. Damit der zweite Statorabschnitt 40 im Bezug auf den ersten Statorabschnitt 20 bei der Rotation des Rotationsabschnitts 30 keine Relativdrehung im Bezug auf den ersten Statorabschnitt 20 ausführt, muss das Getriebe 10 ein Übersetzungsverhältnis i aufweisen bei dem gilt Zähneanzahl Z1 des Zahnrades 11 / Zähneanzahl Z2 des Zahnrades 12 = Zähneanzahl Z3 des Zahnrades 13 / Zähneanzahl Z4 des Zahnrades 14. Dieses bewirkt eine statische Anordnung des Statorabschnitts 40 im Bezug auf den Statorabschnitt 20, wodurch auch alle fest mit dem Statorabschnitt 40 verbundenen Bauteile ebenfalls keiner Drehbewegung unterliegen.

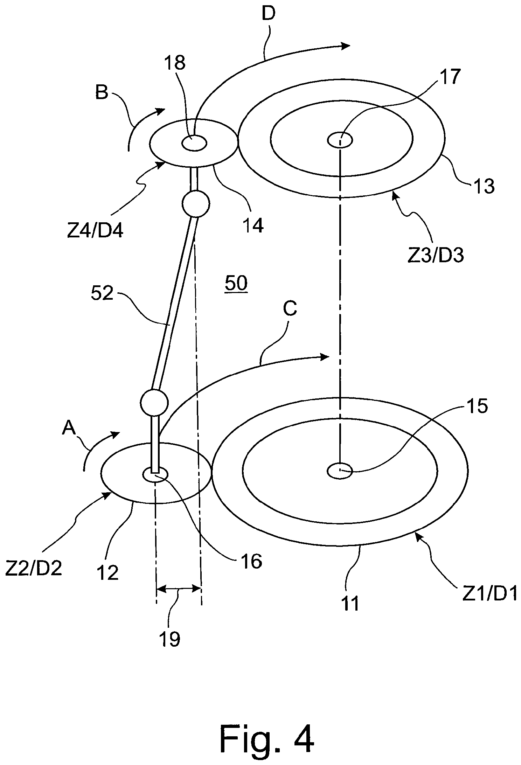

In der Ausführung gemäß Fig. 3 weisen die Zahnräder 11 und 13 und die Zahnräder 12 und 14 jeweils denselben Durchmesser auf. In Fig. 4 ist eine Ausführungsform dargestellt, bei der die Zahnräder 11 bis 14 unterschiedliche Durchmesser aufweisen. Dadurch kommt es zu einem Achsversatz 19 zwischen den Mittelpunkten 16 und 18. Um diesen Achsversatz 19 auszugleichen, ist das Steuerelement 51 als Gelenkwelle 53 ausgeführt.

Alternativ zu den Zahnrädern 11 bis 14 können hier Reibräder eingesetzt werden. Diese rollen dann analog aufeinander ab. Für das Übersetzungsverhältnis i gilt dabei Durchmesser D1 des Reibrades 11 / Durchmesser D2 des Reibrades 12 = Durchmesser D3 des Reibrades 13 / Durchmesser D4 des Reibrades 14.

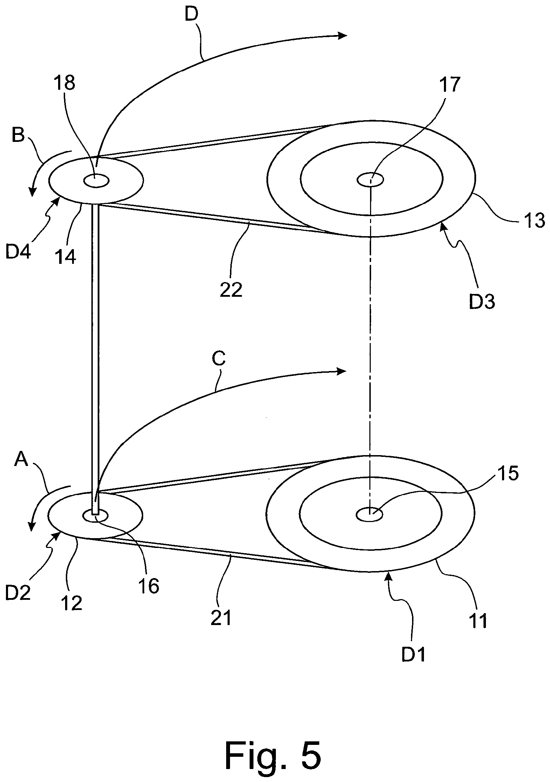

Fig. 5 zeigt eine schematische Prinzipskizze einer ersten Ausführungsform einer erfindungsgemäßen Verdrehsicherung 10. Hierbei finden Zahnrädern 11 bis 14 Riemenräder 11 bis 14 als Getriebeelemente 11 bis 14 Einsatz. Die Riemenräder 11 und 12 sind dabei mit einem Treibriemen 21 und die Riemenräder 13 und 14 sind mit einem Treibriemen 22 wirkverbunden. Für das Übersetzungsverhältnis i gilt dabei ebenfalls Durchmesser D1 des Riemenrades 11 / Durchmesser D2 des Riemenrades 12 = Durchmesser D3 des Riemenrades 13 / Durchmesser D4 des Riemenrades 14. Die übrige Funktion der Verdrehsicherung ist identisch, lediglich die Rotationsrichtungen A, B sind entgegengesetzt zu den Wälzrichtungen.

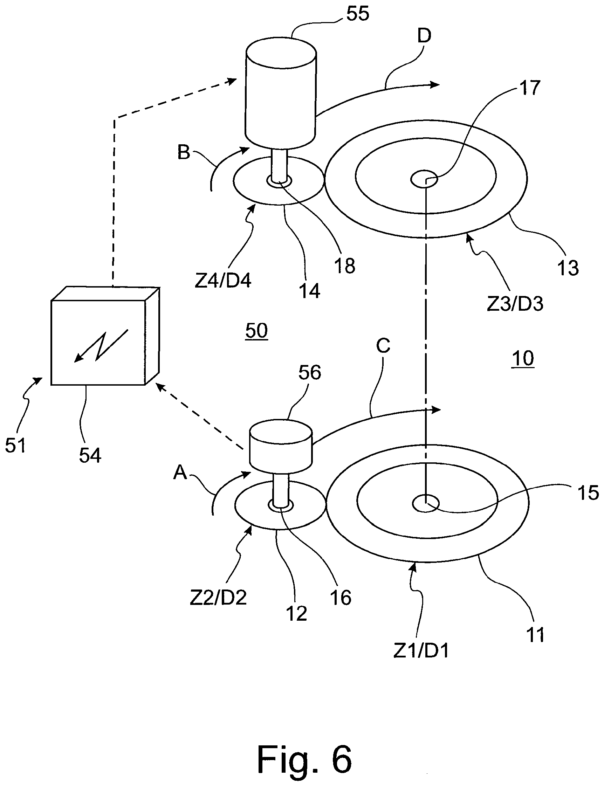

Fig. 6 zeigt eine schematische Prinzipskizze einer vierten Ausführungsform einer erfindungsgemäßen Verdrehsicherung 10. Es sind wiederum Getriebeelemente 11 bis 14 vorgesehen, die beispielsweise als Zahnräder ausgeführt sind. Deren Anordnung ist wie zuvor beschrieben, auch hinsichtlich des Übersetzungsverhältnisses.

Anders als bei den zuvor beschriebenen Ausführungsformen ist die Steuerung 50 hier nicht mechanisch sondern elektronisch ausgeführt. Hierfür ist ein Steuerelement 51 in Form einer programmierbaren Steuerungseinheit 54 vorgesehen, die mit einem Drehgeber 55 und einem Servoantrieb 56 elektrisch verbunden ist. Der Drehgeber 56 ist zusammen mit dem Zahnrad 12 wirkverbunden mit dem Rotorabschnitt 30. Der Drehgeber nimmt dabei die Drehzahl des Zahnrades 12 auf und leitet diese elektronisch an die Steuerungseinheit 54. Diese ist mit dem Servoantrieb 56 verbunden, der das Zahnrad 14 antreibt. Aus den vom Drehgeber 56 ermittelt und an die Steuerungseinheit 54 übermittelten Daten errechnet die Steuerungseinheit 54 die Antriebsdaten für den Servoantrieb 55, damit das Zahnrad 14 sich mit der Drehzahl dreht, damit das Übersetzungsverhält der Zahnräder und die Drehung der Zahnräder so ausfällt, dass der zweite Statorabschnitt 40 statisch im Bezug auf den Statorabschnitt 20 angeordnet ist.

Fig.1 zeigt eine erfindungsgemäße Rotationvorrichtung 100 mit einem ersten Statorabschnitt 20 mit einer Basis 23 auf der ein erster Abschnitt 24 einer Dreheinführung, beispielsweise für die Flüssigkeitszufuhr, und ein Rollenlager 25 angeordnet ist. An der Basis 23 ist ein erstes Zahnrad 11 auf einem Zahnradträger 26 fest angeordnet. Weiterhin weist die Basis 23 Gabel 28 auf, in der eine Kurvenrolle 27 als Ausgleich bei Taumelschlag geführt wird, die am ersten Abschnitt 24 der Dreheinführung angeordnet ist. Diese ist in Seitenansicht in Fig. 2 vergrößert dargestellt.

Auf dem Rollenlager 25 ist der Rotorabschnitt 30 angeordnet, bei dem es sich hier beispielsweise um ein Blasrad handelt, an dem einzelne Blasstationen 31 angeordnet sind. Innerhalb des Blasrades 30 ist ein zweiter Abschnitt 32 einer Dreheinführung vorgesehen. Am Blasrad 30 selber ist eine Drehverbindung 33 für den Eingriff eines Zahnrads 34 eines Antriebs (nicht dargestellt) für das Blasrad 30 vorgesehen.

Als Mitnehmer für die Transmissionswelle 52 der Verdrehsicherung 10, an der sich die Zahnräder 12, 14 befinden, sind im Blasrad 30 mehrere Wellenlager 35 vorgesehen, durch die sich die Transmissionswelle 52 erstreckt. Das Zahnrad 12 ist dabei im Eingriff mit dem Zahnrad 11 des ersten Statorabschnitts 20. Am oberen Ende der Transmissionswelle 52 ist das Zahnrad 14 angeordnet, dass sich mit dem Zahnrad 13 des zweiten Statorabschnitts 40 im Eingriff befindet. Am oberen Ende des Blasrades 30 sind zwei zweite Abschnitte 36, 37 jeweils einer Dreheinführung, beispielsweise für Elektrik und für Blasluft, vorgesehen.

Der zweite Statorabschnitt 40 weist einen Zahnradträger 41 auf, auf dem das Zahnrad 13 fest angeordnet ist. Der zweite Statorabschnitt 40 ist drehend (nicht dargestellt) auf dem Rotorabschnitt 30 gelagert. Er umfasst hier zwei ersten Abschnitte einer Dreheinführung 42, 43. Durch die Verdrehsicherung 10 wird er im Bezug auf den ersten Statorabschnitt 20 starr angeordnet, auch während sich das Blasrad 30 darunter dreht. Es können auch noch weitere Dreheinführungen, beispielsweise für einen Ölkreislauf vorgesehen sein.

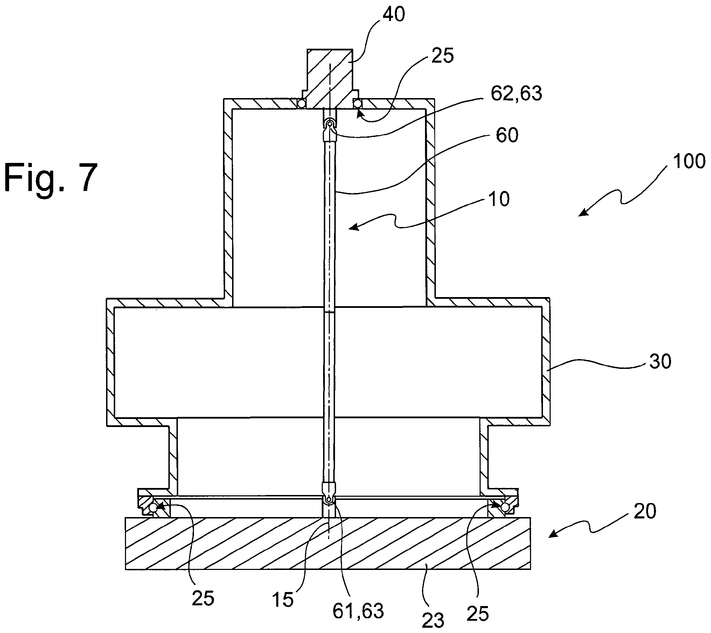

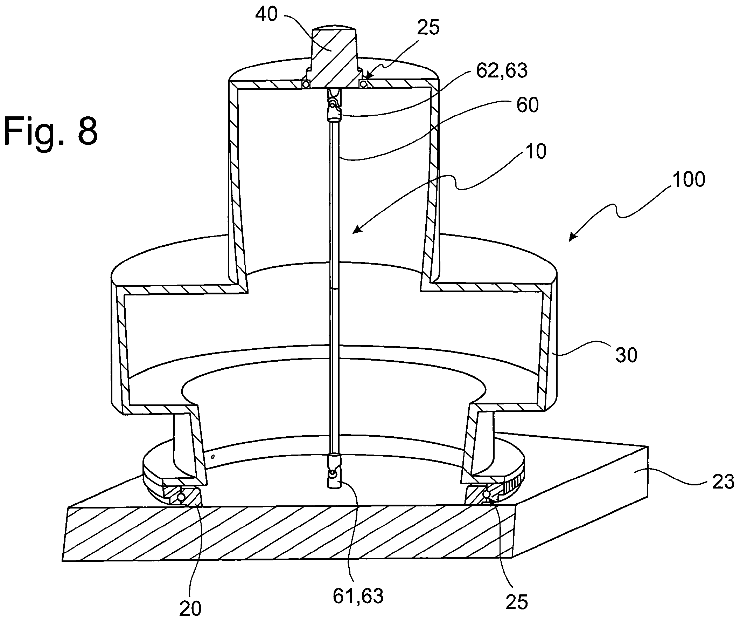

Fig. 7 und Fig. 8 zeigen eine schematische geschnittene Ansicht einer weiteren Ausführungsform einer erfindungsgemäßen Verdrehsicherung 10. Dabei wird zwischen dem ersten Statorabschnitt 20 und dem zweiten Statorabschnitt 40 ein torsionssteifer Stab 60 angeordnet, der direkt im Mittelpunkt 15 der Rotationsmaschine 100 vorgesehen wird. dieser ist über eine erste Kupplung 61 mit dem ersten Statorabschnitt 20 und über eine zweite Kupplung 62 mit dem zweiten Statorabschnitt 40 drehfest verbunden. Der Stab 60 kann, wie hier dargestellt, aus montagegründen zweiteilig ausgeführt werden. Bei den Kupplungen 61, 62 handelt es sich hier um Kardangelenke 63.

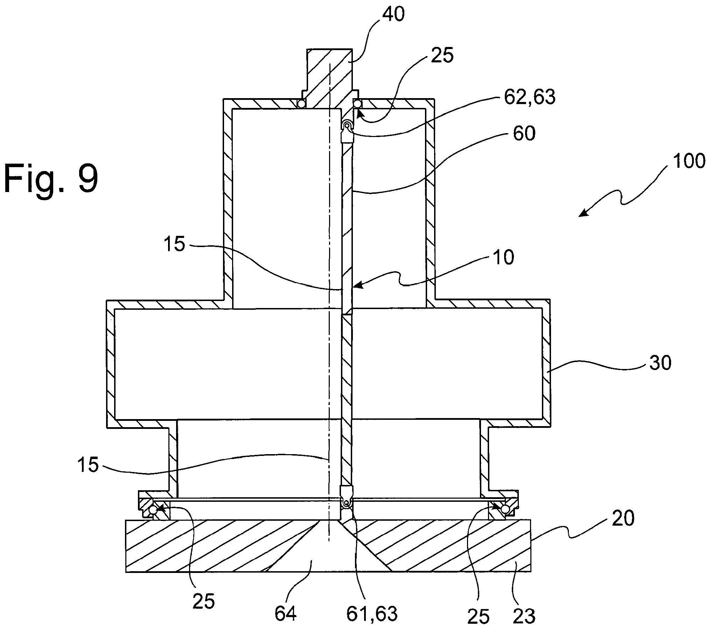

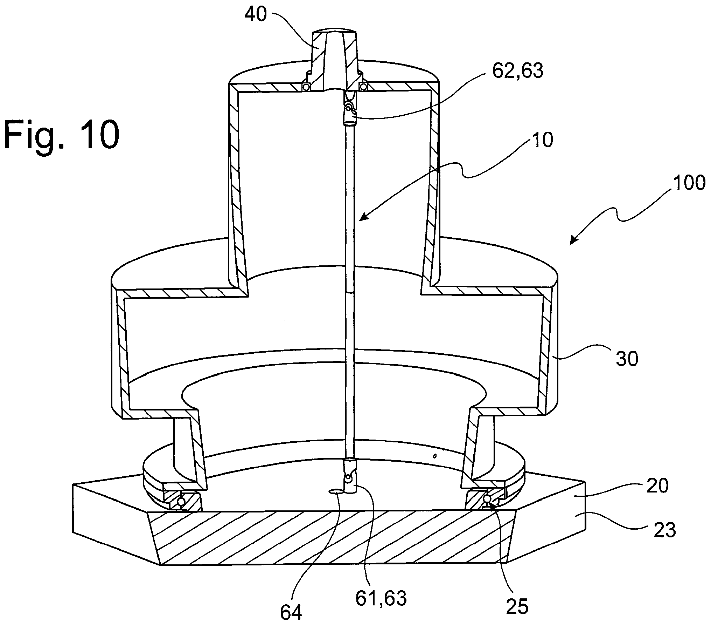

Eine ähnliche Ausführungsform einer erfindungsgemäßen Verdrehsicherung 10 ist schematisch in den Fig. 9 und 10 gezeigt. Auf hier ist ein Stab 60 vorgesehen, der über Kupplungen 61, 62 in Form von Kardangelenken 63 den ersten Statorabschnitt 20 mit dem zweiten Statorabschnitt 40 drehfest verbindet. Um eine Dreheinführung in den Rotorabschnitt 30 zu ermöglichen ist eine Öffnung 64 vorgesehen, die sich im Mittelpunkt 15 befindet. Exzentrisch dazu ist der Stab 60 mit den Kupplungen 61, 62 vorgesehen. Er ist in dieser Ausführungsform dabei so angeordnet, dass die Kupplung 62, die die Verbindung zum zweiten Statorabschnitt 40 bereitstellt, unterhalb diesem angeordnet ist.

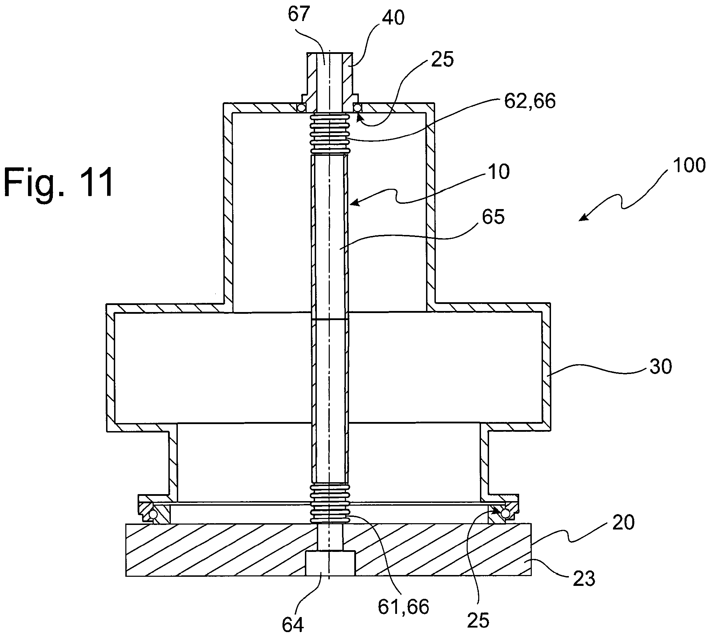

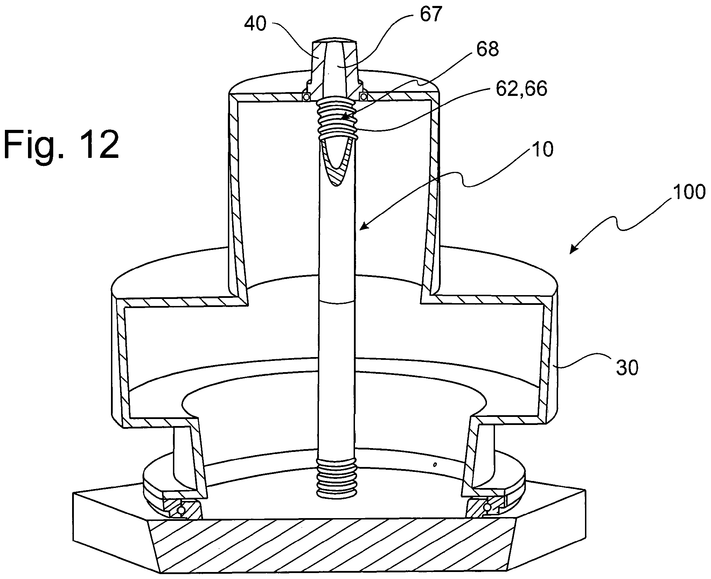

Eine weitere Ausführungsform einer erfindungsgemäßen Verdrehsicherung 10 ist schematisch in den Fig. 11 und 12 gezeigt. Anstelle eines Stabs 60 ist ein Hohlstab 65 vorgesehen, der ebenfalls über Kupplungen 61, 62 mit dem ersten 20 und dem zweiten Statorabschnitt 40 verbunden ist, und diese drehfest miteinander verbindet. Auch der Hohlstab 65 kann aus Montagegründen zweiteilig ausgeführt sein. Als Kupplung sind hier Balge 66 vorgesehen, die bevorzugt als Metallbalg ausgeführt sind. Unterhalb der in Form eines Balgs 66 vorliegenden unteren Kupplung 61 ist ebenfalls eine Öffnung 64 vorgesehen. Diese ist ebenfalls im Mittelpunkt 15 vorgesehen und korrespondiert ggf. mit einem Innenraum 68 eines Balgs und/oder mit einem Innenraum 69 des Hohlstabs 69 und ggf. auch mit einer Öffnung 67 im zweiten Statorabschnitt 40. Über diese Öffnungen 64, 67 und Innenräume 68, 69 wird eine Dreheinführung in den rotorabschnitt 30 ermöglicht.

**Bezugszeichenliste**

| | | | |
|---|---|---|---|
| 10 | Verdrehsicherung/Getriebe | 37 | zweiter Abschnitt einer Dreheinführung (drehend) |
| 11 | erstes Getriebeelement / Zahnrad / Reibrad /Riemenrad | | |
| | | 40 | zweiter Statorabschnitt |
| | | 41 | Zahnradträger |
| 12 | zweites Getriebeelement / Zahnrad / Reibrad /Riemenrad | 42 | erster Abschnitt einer Dreheinführung (statisch) |
| 13 | drittes Getriebeelement / Zahnrad / Reibrad /Riemenrad | 43 | erster Abschnitt einer Dreheinführung (statisch) |
| | | 50 | Steuerung |
| | | 51 | Steuerelement |
| 14 | viertes Getriebeelement / Zahnrad / Reibrad /Riemenrad | 52 | Transmissionswelle |
| | | 53 | Gelenkwelle |
| | | 54 | Steuerungseinheit |
| 15 | Mittelpunkt / Drehzentrum | 55 | Drehgeber |
| 16 | Mittelpunkt / Drehzentrum | 56 | Servoantrieb |
| 17 | Mittelpunkt / Drehzentrum | 60 | Stab |
| 18 | Mittelpunkt / Drehzentrum | 61 | Kupplung |
| 19 | Achsversatz | 62 | Kupplung |
| 20 | erster Statorabschnitt | 63 | Kardangelenk |
| 21 | Treibriemen | 64 | Öffnung |
| 22 | Treibriemen | 65 | Hohlstab |
| 23 | Basis | 66 | Balg |
| 24 | erster Abschnitt einer Dreheinführung (statisch) | 67 | Öffnung |
| 25 | Rollenlager | 68 | Innenraum |
| 26 | Zahnradträger | 69 | Innenraum |
| 27 | Kurvenrolle | 100 | Rotationsmaschine / Blasstation |
| 28 | Gabel | Z1, Z2, Z3, Z4 | Zähneanzahl |
| 30 | Rotorabschnitt/Blasrad | D1, D2, D3, D4 | Durchmesser |
| 31 | Blasstation | D2 | Durchmesser |
| 32 | zweiter Abschnitt einer Dreheinführung (drehend) | D3 | Durchmesser |
| | | D4 | Durchmesser |
| 33 | Drehverbindung | A | Rotationsrichtung |
| 34 | Zahnrad Blasradantrieb | B | Rotationsrichtung |
| 35 | Wellenlager | C | Wälzrichung |
| 36 | zweiter Abschnitt einer Dreheinführung (drehend) | D | Wälzrichung |

## Patentansprüche

1. Rotationsmaschine, bevorzugt eine Vorrichtung zur Blasformung von Behältern aus Kunststoff, mit wenigstens einem ersten Statorabschnitt (20) und wenigstens einem räumlich vom ersten Statorabschnitt (20) getrennten und drehbar zu dem ersten Statorabschnitt (20) gelagerten zweiten Statorabschnitt (40), zwischen denen wenigstens ein Rotorabschnitt (30), bevorzugt ein Blasrad einer Vorrichtung zur Blasformung von Behältern aus Kunststoff, drehbar angeordnet ist, und mit einer Verdrehsicherung (10) zwischen dem ersten (20) und dem zweiten Statorabschnitt (40), **dadurch gekennzeichnet, dass** die Verdrehsicherung (10) mindestens ein Element (52; 55, 14; 13, 60, 65) aufweist, das an dem Rotorabschnitt (30) oder durch den Rotorabschnitt (30) hindurchgehend angeordnet ist.

2. Rotationsmaschine nach Anspruch 1, **dadurch gekennzeichnet, dass** das Element (52; 55, 14; 13) sich bei einer Drehung des Rotorabschnitts (30) mit dem Rotorabschnitt (30) mitbewegt, dass durch die Verdrehsicherung (10) eine Rotationsbewegung des wenigstens einen zweiten Statorabschnitt (40) gegenläufig zur Rotationsbewegung des Rotorabschnitts (30) erzeugbar ist, so dass der erste (20) und der wenigstens eine zweite Statorabschnitt (40) relativbewegungsfrei zueinander angeordnet sind.

3. Rotationsmaschine nach Anspruch 2, **dadurch gekennzeichnet, dass** die Verdrehsicherung (10) ein Getriebe ist, durch das die gegenläufige Rotationsbewegung des wenigstens einen zweiten Statorabschnitts (40) erzeugbar ist.

4. Rotationsmaschine nach Anspruch 3, **dadurch gekennzeichnet, dass** das Getriebe (10) am wenigstens einen zweiten Statorabschnitt (40) ein erstes Getriebeelement (13) aufweist und ein zweites mit dem ersten Getriebeelement (13) wirkverbundenes weiteres Getriebeelement (14) aufweist, und/oder dass das Getriebe (10) am ersten Statorabschnitt (20) ein erstes Getriebeelement (11) aufweist und ein zweites mit dem ersten Getriebeelement (20) wirkverbundenes weiteres Getriebeelement (12) aufweist.

5. Rotationsmaschine nach Anspruch 3 oder 4, **dadurch gekennzeichnet, dass** es sich bei den Getriebeelementen (11, 12, 13, 14) um Zahnräder oder Reibräder handelt, und/oder dass das zweite Getriebeelement (12, 14) abrollend auf dem ersten (11, 13) und mit diesem in Eingriff angeordnet ist, oder dass es sich bei den Getriebeelementen (11, 12, 13, 14) um Riemenscheiben handelt, die über einen Treibriemen (21, 22) miteinander verbunden sind.

6. Rotationsmaschine nach einem der Ansprüche 3 bis 5, **dadurch gekennzeichnet, dass** das Getriebe (10) eine Steuerung (50) aufweist, bevorzugt mechanisch, hydraulisch oder elektronisch.

7. Rotationsmaschine nach Anspruch 6, **dadurch gekennzeichnet, dass** es sich bei der Steuerung (50) um eine Transmissionswelle (52) handelt, die bevorzugt gerade oder als Gelenkwelle (53) ausgeführt ist, und die die beiden weiteren Getriebeelemente (12, 14) des ersten Statorabschnitts (20) und des wenigstens einen zweiten Statorabschnitts (40) mechanisch miteinander verbindet, oder dass es sich bei der Steuerung (50) um eine Steuereinheit handelt, bestehend aus einem Steuerungselement (51) und wenigstens einem Antrieb (56), der mit dem zweiten Getriebeelement (14) des wenigstens einen zweiten Statorabschnitts (40) wirkverbunden ist und dieses antreibt, und bevorzugt einem mit einem der zweiten Getriebeelemente (12) des ersten Statorabschnitts (20) verbundenen Drehgeber (55).

8. Rotationsmaschine nach einem der Ansprüche 2 bis 7, **dadurch gekennzeichnet, dass** an wenigstens einem Statorabschnitt (20, 40) eine Dreheinführung (24, 32, 36, 37, 42, 43) für Druckluft, Gas, Flüssigkeit, Elektrik und/oder Öl angeordnet ist.

9. Rotationsmaschine nach einem der Ansprüche 2 bis 8, **dadurch gekennzeichnet, dass** der Antrieb des zweiten Getriebeelements (14) des wenigstens einen zweiten Statorabschnitts (40) über die Drehbewegung des Rotorabschnitts (30) erfolgt, indem wenigstens ein zweites Getriebeelement (14) mit dem Rotorabschnitt (30) wirkverbunden ist.

10. Rotationsmaschine nach Anspruch 9 in Verbindung mit Anspruch 7, **dadurch gekennzeichnet, dass** die Verbindung erfolgt, indem die Transmissionswelle (52) in einem Wellenlager (35) im Rotorabschnitt (30) gelagert ist, wobei sich die Transmissionswelle (52) bevorzugt durch den Rotorabschnitt (30) hindurch erstreckt.

11. Rotationsmaschine nach einem der Ansprüche 2 bis 10 **dadurch gekennzeichnet, dass** es sich bei dem Element (52; 55, 14; 13) um ein Getriebeelement (13, 14), eine Transmissionswelle (52) oder eine Drehgeber (55) handelt.

12. Rotationsmaschine nach Anspruch 1, **dadurch gekennzeichnet, dass** das Element (60, 65) am ersten Statorabschnitt (20) und am zweiten Statorabschnitt (40) jeweils ortsfest diese verbindend angeordnet ist, so dass der erste Statorabschnitt (20) und der wenigstens eine zweite Statorabschnitt (40) relativbewegungsfrei zueinander angeordnet sind, wobei das Element (60, 65) insbesondere torsionssteif ausgeführt ist und/oder wobei das Element (60, 65) als Stab (60) oder Hohlstab (65) ausgeführt ist.

13. Rotationsmaschine nach Anspruch 12, **dadurch gekennzeichnet, dass** das Element (60, 65) mit wenigstens einem der Statorabschnitte (20, 30) über eine Kupplung (61, 62) verbunden ist.

14. Rotationsmaschine nach Anspruch 13, **dadurch gekennzeichnet, dass** es sich bei der Kupplung (61, 62) um eine Kardankupplung (63) oder um eine Balgkupplung (66) handelt.

15. Rotationsmaschine nach einem der Ansprüche 12 bis 14, **dadurch gekennzeichnet, dass** das Element (60, 65) im Drehzentrum (15) des Rotorabschnitts (30) oder unterhalb des zweiten Statorabschnitts (40) angeordnet ist.

## Claims

1. A rotating machine, preferably a device for blow moulding containers made of plastic, having at least one first stator section (20) and at least one second stator section (40) that is spatially separated from the first stator section (20) and is mounted such that it is rotatable in relation to the first stator section (20), with at least one rotor section (30), preferably a blow moulding wheel of a device for blow moulding containers made of plastic, being rotatably arranged between said stator sections, and having an antirotation security device (10) between the first (20) and the second stator section (40), **characterised in that** the antirotation security device (10) has at least one element (52; 55, 14; 13, 60, 65) that is arranged at the rotor section (30) or such that it passes through the rotor section (30).

2. The rotating machine in accordance with Claim 1, **characterised in that** the element (52; 55, 14; 13) moves along with the rotor section (30) when the rotor section (30) rotates, that the antirotation security device (10) can generate a rotary motion of the at least one second stator section (40) in the opposite direction of the rotary motion of the rotor section (30), with the result that the first (20) and the at least one stator section (40) are arranged in relation to each other in a manner free from relative motion.

3. The rotating machine in accordance with Claim 2, **characterised in that** the antirotation security device (10) is a gearing mechanism which can generate the counter-rotating motion of the at least one second stator section (40).

4. The rotating machine in accordance with Claim 3, **characterised in that** the gearing mechanism (10) at the at least one second stator section (40) has a first gearing element (13) and a second other gearing element (14) that is operably connected to the first gearing element (13), and/or that the gearing mechanism (10) at the first stator section (20) has a first gearing element (11) and a second other gearing element (12) that is operably connected to the first gearing element (20).

5. The rotating machine in accordance with Claim 3 or 4, **characterised in that** the gearing elements (11, 12, 13, 14) are gear wheels or friction wheels and/or that the second gearing element (12, 14) is arranged such that it is rolling on the first gearing element (11, 13) and engages the same, or that the gearing elements (11, 12, 13, 14) are belt pulleys which are connected to each other via a driving belt (21, 22).

6. The rotating machine in accordance with any one of Claims 3 to 5, **characterised in that** the gearing mechanism (10) has a control (50), preferably a mechanical, hydraulic or electronic one.

7. The rotating machine in accordance with Claim 6, **characterised in that** the control (50) is a transmission shaft (52) which preferably is configured straight or as an articulated shaft (53) and which mechanically connects the two other gearing elements (12, 14) of the first stator section (20) and the at least one second stator section (40), or that the control (50) is a control unit that consists of a control element (51) and at least one drive (56) operably connected to the second gearing element (14) of the at least one second stator section (40) and drives the same, and preferably of a rotary encoder (55) that is connected to one of the second gearing elements (12) of the first stator section (20).

8. The rotating machine in accordance with any one of Claims 2 to 7, **characterised in that** a rotary connection (24, 32, 36, 37, 42, 43) for compressed air, gas, liquid, electrics and/or oil is arranged at the at least one stator section (20, 40).

9. The rotating machine in accordance with any one of Claims 2 to 8, **characterised in that** the drive of the second gearing element (14) of the at least one second stator section (40) is achieved via the rotary motion of the rotor section (30) by at least one second gearing element (14) being operably connected to the rotor section (30).

10. The rotating machine in accordance with Claim 9 in connection with Claim 7, **characterised in that** the connection is achieved by seating the transmission shaft (52) in a shaft bearing (35) in the rotor section (30), wherein the transmission shaft (52) preferably extends through the rotor section (30).

11. The rotating machine in accordance with any one of Claims 2 to 10, **characterised in that** the element (52; 55, 14; 13) is a gearing element (13, 14), a transmission shaft (52) or a rotary encoder (55).

12. The rotating machine in accordance with Claim 1, **characterised in that** the element (60, 65) at the first stator section (20) and at the second stator section (40) is arranged such that it connects each of the same in a stationary manner, with the result that the first stator section (20) and the at least one second stator section (40) are arranged in relation to each other in a manner free from relative motion, wherein the element (60, 65) is, in particular, designed in a torsionally rigid manner and/or wherein the element (60, 65) is designed as a bar (60) or a hollow bar (65).

13. The rotating machine in accordance with Claim 12, **characterised in that** the element (60, 65) is connected to at least one of the stator sections (20, 30) via a coupling (61, 62).

14. The rotating machine in accordance with Claim 13, **characterised in that** the coupling (61, 62) is a cardan coupling (63) or a metal bellow coupling (66).

15. The rotating machine in accordance with any one of Claims 12 to 14, **characterised in that** the element (60, 65) is arranged in the rotation centre (15) of the rotor section (30) or below the second stator section (40).

## Revendications

1. Machine rotative, de préférence sous forme de dispositif de moulage par soufflage de récipients en matière plastique, avec au moins une première section stator (20) et au moins une seconde section stator (40) séparée dans l'espace de la première et logée de façon à pouvoir tourner par rapport à celle-ci, entre lesquelles est agencée de façon à pouvoir tourner au moins une section rotor (30), de préférence une roue de soufflage d'un dispositif de moulage par soufflage de récipients en matière plastique, et avec un dispositif antirotation (10) entre la première (20) et la seconde section stator (40), **caractérisée en ce que** le dispositif antirotation (10) présente au moins un élément (52; 55, 14; 13, 60, 65) agencé auprès de la section rotor (30) ou de façon à traverser la section rotor (30).

2. Machine rotative selon la revendication 1, **caractérisée en ce que** lors d'une rotation de la section rotor (30), l'élément (52; 55, 14; 13) se meut avec la section rotor (30), et qu'un mouvement de rotation de la(des) seconde(s) section(s) stator (40) en sens opposé au mouvement de rotation de la section rotor (30) puisse être produit au moyen du dispositif antirotation (10) de sorte que la première section stator (20) et la(les) seconde(s) section(s) stator (40) restent relativement immobiles l'une par rapport à l'autre.

3. Machine rotative selon la revendication 2, **caractérisée en ce que** le dispositif antirotation (10) est une transmission qui permet de produire le mouvement de rotation opposée de la (des) seconde(s) section(s) stator (40).

4. Machine rotative selon la revendication 3, **caractérisée en ce que** la transmission (10) présente au niveau de la (des) seconde(s) section(s) stator (40) un premier organe de transmission (13) et un second organe de transmission (14) lié au premier organe de transmission (13) par une liaison fonctionnelle, et/ou **en ce que** la transmission (10) présente au niveau de la première section stator (20) un premier organe de transmission (11) et un second organe de transmission (12) lié au premier organe de transmission (20) par une liaison fonctionnelle.

5. Machine rotative selon la revendication 3 ou 4, **caractérisée en ce que** les organes de transmission (11, 12, 13, 14) sont des roues dentées ou des roues de friction, et/ou **en ce que** le second organe de transmission (12, 14) est agencé de façon à se dérouler sur le premier (11, 13) en étant en prise avec celui-ci, ou **en ce que** les organes de transmission (11, 12, 13, 14) sont des poulies à courroie reliées entre elles par des courroies d'entraînement (21, 22).

6. Machine rotative selon l'une des revendications 3 à 5, **caractérisée en ce que** la transmission présente une commande, de préférence mécanique, hydraulique ou électronique.

7. Machine rotative selon la revendication 6, **caractérisée en ce que** la commande (50) est un arbre de transmission (52) de préférence de forme rectiligne ou réalisé sous forme d'arbre articulé (53) et reliant mécaniquement les deux autres organes de transmission (12, 14) de la première section stator (20) et de la(des) seconde(s) section(s) stator (40), ou **en ce que** la commande (50) est une unité de commande constituée d'un élément de commande (51) et d'au moins un moteur (56), lequel est lié par une liaison fonctionnelle au second organe de transmission (14) de la(des) seconde(s) section(s) stator (40) et l'entraîne, et, de préférence, d'un encodeur (55) lié à l'un des seconds organes de transmission (12) de la première section stator (20).

8. Machine rotative selon l'une des revendications 2 à 7, **caractérisée en ce qu'**un raccord tournant (24, 32, 36, 37, 42, 43) pour le passage d'air comprimé, de gaz, de liquide, d'équipement électrique et/ou d'huile est agencé sur au moins une section stator (20, 40).

9. Machine rotative selon l'une des revendications 2 à 8, **caractérisée en ce que** l'entraînement du second organe de transmission (14) de la(des) seconde(s) section(s) stator (40) a lieu par le mouvement de rotation de la section rotor (30) du fait qu'un second organe de transmission (14) au moins est lié par une liaison fonctionnelle à la section rotor (30).

10. Machine rotative selon la revendication 9 en conjonction avec la revendication 7, **caractérisée en ce que** la liaison est réalisée **en ce que** l'arbre de transmission (52) est logé dans un palier d'arbre (35) dans la section rotor (30), l'arbre de transmission (52) traversant de préférence la section rotor (30).

11. Machine rotative selon l'une des revendications 2 à 10, **caractérisée en ce que** l'élément (52; 55, 14; 13) est un organe de transmission (13, 14), un arbre de transmission (52) ou un encodeur (55).

12. Machine rotative selon la revendication 1, **caractérisée en ce que** l'élément (60, 65) auprès de la première section stator (20) et de la seconde section stator (40) est respectivement fixe et agencé de façon à relier les deux, de sorte que la première section stator (20) et la(les) seconde(s) section(s) stator (40) sont agencées de façon à rester relativement immobiles l'une par rapport à l'autre, l'élément (60, 65) notamment étant réalisé sous forme rigide à la torsion et/ou l'élément (60, 65) étant réalisé sous forme de barre (60) ou de barre creuse (65).

13. Machine rotative selon la revendication 12, **caractérisée en ce que** l'élément (60, 65) est relié à l'une au moins des sections stator (20, 30) par l'intermédiaire d'un accouplement (61, 62).

14. Machine rotative selon la revendication 13, **caractérisée en ce que** l'accouplement (61, 62) est un accouplement à Cardan (63) ou un accouplement à soufflet (66).

15. Machine rotative selon l'une des revendications 12 à 14, **caractérisée en ce que** l'élément (60, 65) est agencé au centre de rotation (15) de la section rotor (30) ou sous la seconde section stator (40).
